# EUROPEAN PATENT APPLICATION

(11) **EP 4 701 029 A1**
(43) Date of publication of application: **25.02.2026**
(21) Application number: 24195200.1
(22) Date of filing: 19.08.2024
(51) Int. Cl.: H02J 7/00, H02J 7/34, H02H 9/00

(54) **CHARGING CIRCUIT FOR A CAPACITIVE COMPONENT, POWER CIRCUIT AND VEHICLE**

(71) Applicant: Aptiv Technologies AG, 8200 Schaffhausen (CH)
(72) Inventor: Typrowicz, Wojciech, 34-113 Beczyn (PL); Tokarz, Krzysztof, 32-744 Lapczyca (PL); Sierka, Marcin, 34-340 Wolbrom (PL); Debski, Janusz, 32-020 Wieliczka (PL)
(74) Representative: Manitz Finsterwald Patent- und Rechtsanwaltspartnerschaft mbB

(57) **Abstract**

A charging circuit for a capacitive component (100) comprises an input terminal (20) for receiving an input current (240), the capacitive component which is coupled to the input terminal, a first resistor (201) coupled in series to the capacitive component and to a reference potential terminal (10), a first transistor (210), which is controlled by a voltage across the first resistor, and a second transistor (220), which is controlled by the first transistor. The charging circuit is configured to operate in a first or in a second mode. In the first mode the capacitive component is charged by means of the input current via the first resistor. In the second mode the first resistor is bypassed by the second transistor.

## Description

### FIELD

The present disclosure relates to a charging circuit for a capacitive component, a power circuit and a vehicle.

### BACKGROUND

In the automotive field large capacitors are employed as so-called bulk capacitance especially in the provision of electrical power from a car battery. Typical capacitance values realized by that large capacitors amount for instance to 330 microfarad or 220 microfarad. At the same time, said capacitors have to realize a low equivalent serial resistance, ESR. Typical ESR values required in corresponding applications range from 15 to 20 milliohm. Generally, hybrid-polymer capacitors are used to fulfill these requirements.

In the field of automotive power supply, bulk capacitance refers to the use of capacitors to stabilize the voltage and provide a reservoir of charge to handle transient loads. These capacitors are typically placed in parallel with the power supply to smooth out voltage fluctuations and reduce ripple caused by sudden changes in current demand. Bulk capacitors are crucial in automotive applications because they have to maintain a stable voltage supply to sensitive electronic components, especially during events like changing startup or when high power devices are activated. This ensures the reliability and performance of the vehicle's electrical system.

During a powering up operation, i.e. when such electrolytic (hybrid-polymer) bulk capacitors are connected to a power source, for instance, a car battery, significant inrush current may occur. Said inrush current needs to be limited by an external circuit to prevent the bulk capacitors from being damaged and/or from adversely affecting their lifetime.

In one known approach said significant inrush current is reduced by a limiter circuit based on one or more resistors which are inserted in the current path between the car battery and the bulk capacitors. However, this solution increases the ESR of the bulk capacitors. Also, resistance values in the range of 20 to 100 milliohm which would be tolerable with respect to the ESR are not high enough to reliably limit the inrush current. What is more, said resistors cause additional power dissipation.

Accordingly, there is a need to provide a charging circuit for a capacitive component and a power circuit with enhanced capabilities concerning inrush current limitation.

### SUMMARY

The present disclosure provides a charging circuit for a capacitive component, a power circuit and a vehicle according to the appended claims. Embodiments and developments are given in the dependent claims, the description and the drawings.

In one aspect, the present disclosure is directed at a charging circuit for a capacitive component. The charging circuit comprises an input terminal for receiving an input current, the capacitive component coupled to the input terminal, a first resistor, a first transistor and a second transistor. The first transistor is coupled to the capacitive component and to a reference potential terminal. The first transistor is controlled by a voltage across the first resistor. The second transistor is controlled by the first transistor. The charging circuit is prepared to operate in a first or in a second mode. In the first mode the capacitive component is charged by means of the input current via the first resistor. In the second mode the first resistor is bypassed by the second transistor.

In the first mode the capacitive component starts out from a discharged state. By supplying the input current charge on the capacitive component increases. A voltage drop across the first resistor which is connected to the capacitive component controls the first transistor such that an inrush current in the first mode is limited to a tolerable level. In the second mode charging of the capacitive component is essentially completed and due to the coupling of the first and the second transistor the first resistor is bypassed. Consequently, the resulting ESR value in the second mode is still low.

According to an embodiment in the first mode the first transistor is switched on and the second transistor is switched off. Furthermore, a level of the input current is limited by the first resistor in the first mode. As the capacitive component starts up from a discharged state in the first mode, most of the input current passes through the first resistor. A resistance value of the first resistor consequently limits the level of the input current, thereby prohibiting excessive inrush current on the capacitive component. The voltage drop across the first resistor which amounts in the first mode roughly to a product of the input current and a resistance of the first resistor and is comparable to a supply voltage provided to the input terminal, controls the first transistor in an on-state, which in turn switches off the second transistor.

According to an embodiment in the second mode the second transistor is switched on and the first transistor is switched off. A capacitance value of the capacitive component is provided as a bulk capacitance to an output terminal of the charging circuit in said second mode. In the second mode charging of the capacitive component is essentially completed, such that most of the supply voltage drops across the capacitive component. This switches off the first transistor and switches on the second transistor. It can be determined that in each mode of operation first and second transistors are basically controlled into opposite states, i.e. when the first transistor is switched on, the second transistor is switched off and vice versa. In the second mode the capacitive component is employed as bulk capacitance according to the definitions provided above in the background section. Following the concept of the proposed solution, the ESR of the capacitive component is only increased by an on resistance, i.e. RDS on, of the second transistor.

According to an embodiment a switch over between the first and the second mode is completed automatically. During charge up of the capacitive component and corresponding increase in voltage across said component, the voltage drop across the first resistor reduces in level and the first transistor which is controlled in function of this voltage drop automatically goes in an off-state, as soon as said voltage drop goes below a certain level, for example, a threshold voltage of said first transistor. This status in which charging of the capacitive component is completed or nearly completed is consequently detected automatically by the proposed circuit.

According to an embodiment the first transistor is coupled by its control terminal to a first connection point between the capacitive component and the first resistor. The first transistor has a controlled section which is coupled to the reference potential terminal and a second connection point. The second transistor is coupled by its controlled terminal to the second connection point. The second transistor has a controlled section which is connected in parallel to the first resistor. By this, one of the output terminals of the first transistor is coupled to the control terminal of the second transistor. Said coupling point is referred to as the second connection point. The first resistor is coupled in series to the capacitive component. A voltage level at the first connection point which represents the voltage drop across the first resistor controls the controlled section of the first transistor by switching the first transistor on or off.

According to an embodiment the charging circuit further comprises a second resistor and a second capacitor. Second resistor and second capacitor form an RC component, which is prepared to delay switching on of the second transistor by an adjustable delay time. For this, the second resistor and the second capacitor are connected to each other in series. A connection point between those two components may be connected to the second transistor, for instance, to its control terminal. The resulting RC component realizes a time constant which is used for delaying switching on of the second transistor by a certain amount of time after switch off of the first transistor. Said amount of delay time can be adjusted by suitable dimensioning of a resistance value of the second resistor and/or of a capacitance value of the second capacitor.

According to an embodiment the second resistor is connected to an output terminal of the charging circuit and to a first terminal of the second capacitor. The second terminal of the second capacitor is connected to the reference potential terminal. A second connection point between the second resistor and the second capacitor is coupled to the second transistor. The output terminal of the charging circuit is coupled to the input terminal with the capacitive component being arranged in between, i.e. parallel to a power supply providing the input current.

According to an embodiment the charging circuit further comprises a Zener diode which is connected to the second transistor and to the reference potential terminal. The Zener diode is prepared as a shunting means for the second transistor, especially for the control terminal of the second transistor. The Zener diode prevents the control terminal of the second transistor from being damaged by an intolerable level of voltage peaks that might occur.

According to an embodiment the capacitive component comprises a first capacitor coupled between the input terminal and the first resistor. Alternatively, the capacitive component comprises two or more capacitors, which are coupled in parallel to each other between the input terminal and the first resistor. In other words, the number of capacitors used for implementing the capacitive component is a random number. At least one capacitor has to be used. In each case, hybrid-polymer capacitors are employed.

According to an embodiment the first transistor comprises a bipolar junction transistor, especially an NPN-transistor. The second transistor comprises a field effect transistor, especially an n-channel metal oxide semiconductor, NMOS, transistor. In an alternative solution first and second transistors comprise respective transistors with opposite polarity, i.e. the first transistor comprises a bipolar junction transistor of type PNP, and the second transistor comprises a p-channel MOSFET. For achieving small values of resulting Equivalent Serial Resistance of the charging circuit, i.e. by a small RDSon, and reducing costs, for the first transistor the NPN transistor is chosen and for the second transistor the NMOS transistor is chosen.

In another aspect, the present disclosure is directed to a power circuit. Said power circuit comprises the charging circuit as described above and a battery which is connected to the input terminal of the charging circuit. The battery is prepared to provide the input current. Thereby the battery forms a power source for the charging circuit. The battery may be represented by a car battery.

According to an embodiment in the first mode the battery is switched on and in the second mode an output voltage is provided at an output terminal of the charging circuit as a function of the input current. Switching on of the battery initiates powering up of the circuit and the charging of the capacitive components as described above. The battery provides the input current and a corresponding input voltage. In the second mode the output voltage is provided as depending on the input current/input voltage. By using the capacitive component which works as a bulk capacitance the output voltage is stabilized, ripples and peaks are reduced.

In still another aspect, the present disclosure is directed to a vehicle comprising the power circuit as described above. The vehicle may be a car.

### DRAWINGS

Exemplary embodiments and functions of the present disclosure are described herein in conjunction with the following drawings, showing schematically:
- Fig. 1: an exemplary circuit diagram of a charging circuit according to various embodiments; and

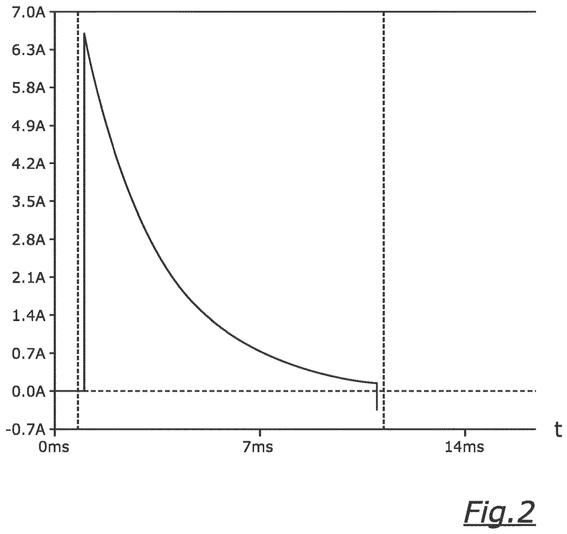

- Fig. 2: an exemplary timing diagram for the circuit of Fig. 1.

### DETAILED DESCRIPTION

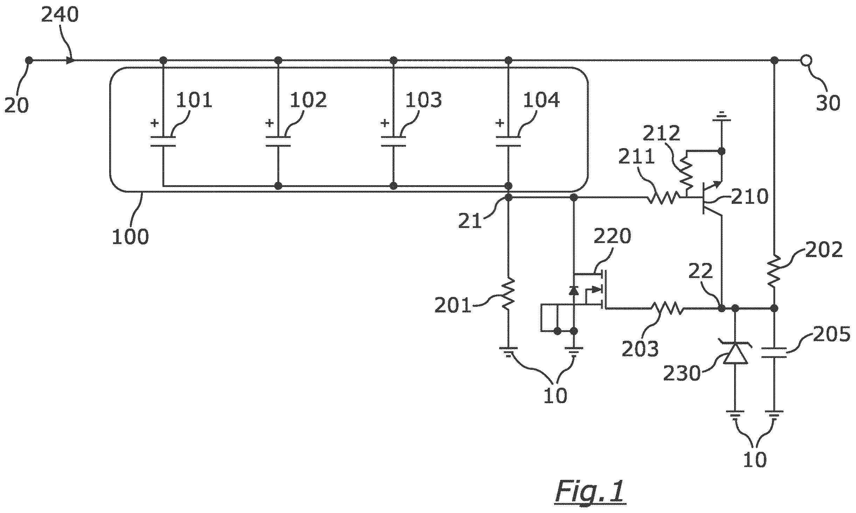

Fig. 1 depicts an exemplary circuit diagram of a charging circuit according to various embodiments. The charging circuit which is suitable for charging a capacitive component comprises an input terminal 20, the capacitive component 100, a first resistor 201, a first transistor 210 and a second transistor 220. The input terminal 20 is prepared for receiving an input current 240. The capacitive component 100 is coupled to the input terminal 20 and also to one terminal of the first resistor 201. The first resistor 201 is coupled with its other terminal to a reference potential terminal 10. Said reference potential terminal 10 carries a reference potential, for example, ground. A connection point between the first terminal of the first resistor 201 and the capacitive component 100 may be referred to as a first connection point 21.

The first transistor 210 is coupled with its control terminal to said first connection point 21. A controlled section of the first transistor 210 is coupled to the reference potential terminal 10 and to a second connection point 22. In the depicted exemplary embodiment the second transistor 210 is realized as a bipolar junction transistor of type NPN. Accordingly, in this example, a base terminal represents the control terminal of the first transistor 210. The controlled section extends between the emitter terminal which is coupled to the reference potential terminal 10 and the collector terminal which is coupled to the second connection point 22. The first transistor 210 here is operated in an emitter circuit. For this, a coupling resistor 212 is connected between emitter and base terminals. The base terminal is coupled by resistor 211 to the first connection point 21.

The second transistor 220 is coupled to the first transistor 210, such that the second transistor 220 is controlled by the first transistor 210. In detail, an output terminal, here the collector terminal of the first transistor 210, is coupled to a control input of the second transistor 220. In the depicted example, the coupling is implemented by resistor 203. The second transistor 220 in the exemplary schematic is realized by an NMOS transistor. Therein, a gate terminal forms the control input, which is coupled via resistor 203 to the second connection point 22. The controlled section of the second transistor 220 is coupled in parallel to the first resistor 201. In the depicted example, said controlled section of the second transistor 220 extends between a drain terminal which is connected to the first connection point 21 and a source terminal which is connected to the reference potential terminal 10. The exemplary circuit diagram also shows the three-pin source connection of the second transistor 220. The second connection point 22 is coupled to an output terminal 30 of the charging circuit.

In the first mode in which the charging circuit is operated the capacitive component 100 is charged, starting out from a discharged state, by means of the input current 240 via the first resistor 201. At the beginning, i.e. right after switching on a power source (not shown) which provides the input current 240, the majority of the input current 240 passes through the first resistor 201. Most of an input voltage which is present at the input terminal 20 drops across the first resistor 201, i.e. between the first connection point 21 and the ground potential terminal 10. Consequently, the first transistor 210 is switched on and via the coupling of its collector terminal and resistor 203 the first transistor 210 pulls the gate terminal of the second transistor 220 to a low potential, i.e. ground, which switches off the second transistor 220. The capacitive component 100 starts to build up charge, such that a voltage drop across the capacitive component 100 rises. Due to the voltage divider established by the capacitive component 100 and the first resistor 201, the voltage drop across the first resistor 201 reduces.

In the second mode the voltage drop across the first resistor 201 has reduced to a value below the threshold voltage of the first transistor 210, which switches off the first transistor 210. The second transistor 220 is thus switched on. As the on resistance of the second transistor 220 is lower than a resistance of the first resistor 201, the current which passes through the capacitive component 100 passes through the controlled section of the second transistor 220 to the ground potential terminal 10. Thereby, the first resistor 201 is bypassed and the resulting ESR of the charging circuit is reduced to a minimum.

The capacitive component 100 may be realized by a single capacitor, for example by a first capacitor 101. Alternatively, the capacitive component 100 may be realized by a number of N capacitors, which are coupled in parallel to each other. In the depicted example, the capacitive component 100 is realized by four capacitors 101, 102, 103 and 104. Each capacitor is implemented by a hybrid capacitor. A bulk capacitance realized by the depicted circuit example has an ESR which is four times lower than an ESR of a realization using a single hybrid capacitor. For example an ESR of the depicted realization may be at 5 milliohm. Capacitance values of the four capacitors 101 to 104 comprised by the capacitive component 100 may each be at roughly 330 microfarad.

In an exemplary implementation the first resistor 201 has a resistance value of approximately 2 ohm. An RDSon achieved by the second transistor 220 in the depicted example may amount to 7 milliohm. In said example, an external power source may be connected to the input terminal 20. The external power source, for example a car battery, may provide 12 volt. By means of the proposed solution and following the present example, an inrush current may be reduced to a maximum value of 6.5 ampere. Said inrush current is divided onto the four capacitors 101 to 104 of the capacitive component 100, such that each capacitor experiences a maximum of 1.63 ampere. The resulting ESR of the charging circuit is only increased by 7 milliohm due to the low RDSon of the second transistor 220.

By means of suitable dimensioning of circuit components the inrush parameters, for instance the current peak value and its duration can be adjusted to the respective use case.

Optionally, the circuit further comprises an RC component which is prepared to delay switching on of the second transistor 220 by an adjustable delay time. That RC component is implemented by a second resistor 202 and a second capacitor 205, which are connected in series between the output terminal 30 and the reference potential terminal 10. A connection point between the second resistor 202 and the second capacitor 205 is connected to the second connection point 22.

Optionally, the charging circuit further comprises a Zener diode 230. Said Zener diode 230 is connected to the reference potential terminal 10 by its anode terminal. By its cathode terminal the Zener diode 230 is connected via the third resistor 203 to the gate terminal of the second transistor 220. Consequently, the Zener diode 230 acts as a shunting means which prevents the gate terminal of the second transistor 220 from an over-voltage.

Fig. 3 depicts an exemplary timing diagram for the circuit of Fig.1. A level of the current through the capacitive component 100 is shown in relation to time t. Said current may occur for instance at the first connection point 21 of Fig. 1. It can be seen that 6.5 ampere is the maximum inrush current which flows after switching on the power source. After approximately 10 milliseconds the capacitive component is charged. By means of the proposed solution, which has been described above, a value of the inrush current on the bulk-capacitance is reduced, such that lifetime of the hybrid capacitors implementing said bulk-capacitance is not adversely affected. At the same time, the low ESR of said capacitance is only increased by the low RDSon of the second transistor.

By adjusting values of components used in the circuit of Fig. 1, the maximum value of the inrush current and its duration can be tuned to the requirements of the application.

It is to be understood that the embodiments explained above show the principle of the present application only for the purpose of illustration. In practice, embodiments may be realized in many different applications/use cases employing different values of components. Unless context dictates otherwise, connections or couplings refer to direct, i.e. pure wiring, or indirect, i.e. wiring and other components, electrical connections. The term comprising refers to a non-exhaustive list of components.

### Reference numeral list

- 10: reference potential terminal
- 20: input terminal
- 30: output terminal
- 100: capacitive component
- 101, 102, 103, 104, 205: capacitor
- 210, 220: transistor
- 21, 22: connection point
- 201, 202, 203, 211, 212: resistor

## Claims

1. Charging circuit for a capacitive component comprising an input terminal (20) for receiving an input current (240),
the capacitive component (100) coupled to the input terminal (20),
a first resistor (201) coupled to the capacitive component and to a reference potential terminal (10),
a first transistor (210) which is controlled by a voltage across the first resistor (201),
a second transistor (220) which is controlled by the first transistor (210), wherein the charging circuit is prepared to operate in a first or in a second mode, wherein in the first mode the capacitive component (100) is charged by means of the input current (240) via the first resistor (210) and in the second mode the first resistor (210) is bypassed by the second transistor (220).

2. The charging circuit of claim 1,
wherein in the first mode the first transistor (210) is switched on and the second transistor (220) is switched off and a level of the input current (240) is limited by the first resistor (201).

3. The charging circuit of claim 1 or 2,
wherein in the second mode the second transistor (220) is switched on and the first transistor (210) is switched off and a capacitance value of the capacitive component (100) is provided as a bulk capacitance to an output terminal (30) of the charging circuit.

4. The charging circuit of any of claims 1 to 3,
wherein a switch over between the first and the second mode is completed automatically.

5. The charging circuit of any of claims 1 to 4,
wherein the first transistor (210) is coupled by its control terminal to a first connection point (21) between the capacitive component (100) and the first resistor (201), the first transistor having a controlled section coupled to the reference potential terminal (10) and a second connection point (22), wherein the second transistor (220) is coupled by its control terminal to the second connection point (22), the second transistor (220) having a controlled section connected in parallel to the first resistor (201).

6. The charging circuit of any of claims 1 to 5,
further comprising a second resistor (202) and a second capacitor (205), wherein an RC component is formed by the second resistor (202) and the second capacitor (205) and the RC component is prepared to delay switching on of the second transistor (220) by an adjustable delay time.

7. The charging circuit of the preceding claim,
wherein the second resistor (202) is connected to an output terminal (30) of the charging circuit and to a first terminal of the second capacitor (205), wherein a second terminal of the second capacitor (205) is connected to the reference potential terminal (10),
wherein a second connection point (22) between the second resistor (202) and the second capacitor (205) is coupled to the second transistor (220).

8. The charging circuit of any of claims 1 to 7,
further comprising a Zener diode (230) connected to the second transistor (220) and the reference potential terminal (10), the Zener diode (230) being prepared as a shunting means for the second transistor (220), especially for the control terminal of the second transistor (220).

9. The charging circuit of any of claims 1 to 8,
wherein the capacitive component (100) comprises a first capacitor (101) coupled between the input terminal (20) and the first resistor (201), or wherein the capacitive component (100) comprises two or more capacitors (101, 102, 103, 104), which are coupled in parallel to each other between the input terminal (20) and the first resistor (201).

10. The charging circuit of any of claims 1 to 9,
wherein the first transistor (210) comprises a bipolar junction transistor, especially an NPN-transistor, and
wherein the second transistor (220) comprises a field-effect transistor, especially an N-channel Metal-oxide semiconductor, NMOS, transistor.

11. Power circuit comprising
the charging circuit according to any of claims 1 to 10, and
a battery which is connected to the input terminal (20) of the charging circuit, the battery being prepared to provide the input current (240).

12. The power circuit of the preceding claim,
wherein in the first mode the battery is switched on and in the second mode an output voltage is provided at an output terminal of the charging circuit as a function of the input current (240).

13. Vehicle comprising the power circuit according to claim 11 or 12.
